# EUROPEAN PATENT APPLICATION

(11) **EP 2 949 929 A1**
(43) Date of publication of application: **02.12.2015**
(21) Application number: 15000095.8
(22) Date of filing: 15.01.2015
(51) Int. Cl.: F03G 7/10

(54) **DRIVING DEVICE**

(30) Priority: 28.05.2014 TW 103118624
(71) Applicant: Hsu, Po-Jiy, Kaohsiung City 806 (TW); Hsu, Yi-Ping, Kaohsiung City 806 (TW)
(72) Inventor: Hsu, Yi-Ping, 806 Kaohsiung City (TW); Hsu, Chia-Ming, 806 Kaohsiung City (TW); Hsu, Ting-Chen, 806 Kaohsiung City (TW); Hsu Chu, Yu-Lien, 806 Kaohsiung City (TW)
(74) Representative: Zeitler Volpert Kandlbinder Patent- und Rechtsanwälte Partnerschaft mbB

(57) **Abstract**

A driving device (1) for driving a rotating shaft (21) includes an annular frame (11), a magnetic pendulum unit (12), a plurality of electromagnetic units (13) and a plurality of control units (14). The magnetic pendulum unit (12) is rotatable about a center (112) of the annular frame (11) through which a rotating shaft (21) extends and is connected co-rotatably to the rotating shaft (21). The electromagnetic units (13) and the control units (14) are alternatively and equiangularly arranged along a circumference of the annular frame (11). The control units (14) are configured to turn on and off the respective electromagnetic units (13) to generate a magnetic force between the magnetic pendulum unit (12) and the respective electromagnetic units (13) for facilitating rotation of the magnetic pendulum unit (12) and allow the magnetic pendulum unit (12) to pass by the respective electromagnetic units (13), respectively.

## Description

This disclosure relates to a driving device, more particularly to a driving device for driving a rotating shaft.

A generator is usually driven by a conventional driving device, such as a windmill, a waterwheel, a steam turbine driven by fossil fuels (e.g., coal), for converting mechanical energy to electric power. However, since natural energy sources, such as wind power and water power, are unstable, the conventional driving device using such energy sources (e.g., the windmill and the waterwheel) cannot generate electric power stably. Further, due to the recent rise in environmental awareness, the conventional driving device driven by fossil fuels is unable to support environmental protection.

Therefore, the present disclosure is to provide a driving device for driving a rotating shaft. The driving device includes an annular frame, a magnetic pendulum unit, a plurality of electromagnetic units and a plurality of control units. The annular frame defines a center that allows the rotating shaft to extend therethrough. The magnetic pendulum unit is rotatable about the center of the annular frame and is configured to be connected co-rotatably to the rotating shaft. The electromagnetic units are mounted on the annular frame, and are isogonally spaced-apart from each other along a circumference of the annular frame. The control units are mounted at the annular frame corresponding to the electromagnetic units, respectively. Each of the control units is spaced apart from a corresponding one of the electromagnetic units. Each of the control units is configured to turn on the corresponding one of the electromagnetic units to generate a magnetic force for attracting the magnetic pendulum unit so as to facilitate rotation of the magnetic pendulum unit, and to turn off the corresponding one of the electromagnetic units to stop generating the magnetic force so as to allow the magnetic pendulum unit to pass by the corresponding one of the electromagnetic units.

Other features and advantages of the present disclosure will become apparent in the following detailed description of the embodiments of the disclosure, with reference to the accompanying drawings, in which:
FIG. 1 is a schematic top view of a first embodiment of an electric generating system according to the present disclosure;
FIG. 2 is a schematic side view of the first embodiment of the electric generating system, illustrating a magnetic pendulum unit that includes two levers connected to a rotating shaft and two magnetic elements connected to the levers, respectively;
FIG. 3 is a schematic top view of a second embodiment of the electric generating system according to the present disclosure, illustrating the magnetic pendulum unit including three levers and three magnetic elements;
FIG. 4 is a perspective view of a third embodiment of the electric generating system according to the present disclosure;
FIG. 5 is a schematic top view of the third embodiment of the electric generating system according to the present disclosure;
FIG. 6 is a schematic side view of the third embodiment of the electric generating system;
FIG. 7 is a schematic side view of the third embodiment of the electric generating system, illustrating an interconnecting unit connected to and driven by the rotating shaft, a main gear and a plurality of driven gears;
FIG. 8 is a schematic top view of the third embodiment of the electric generating system, illustrating the main gear connected to the interconnecting unit and meshing with the driven gears;
FIG. 9 is a perspective view of the third embodiment of the electric generating system, in which the main gear is an internal gear and the driven gears are external gears; and
FIG. 10 is a perspective view of a modification of the third embodiment of the electric generating system, in which the main gear is an external gear and the driven gears are internal gears.

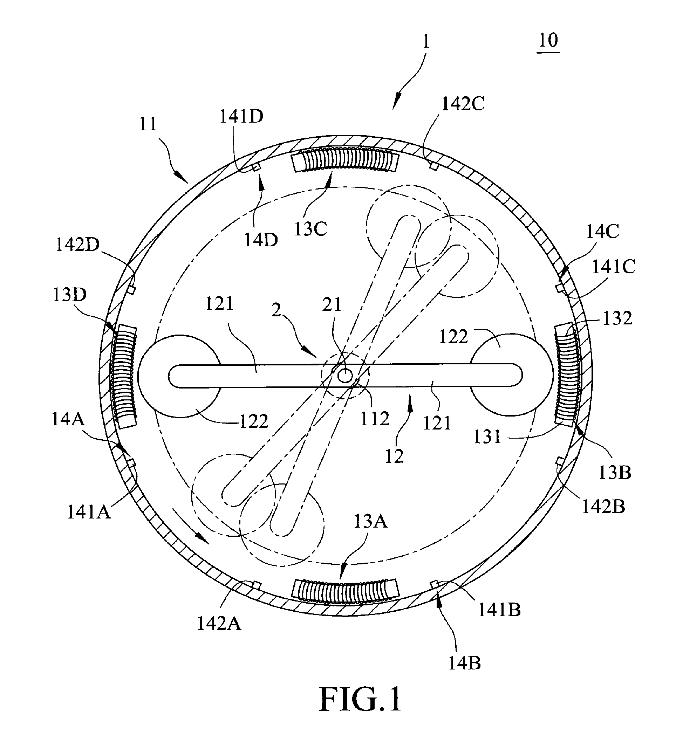

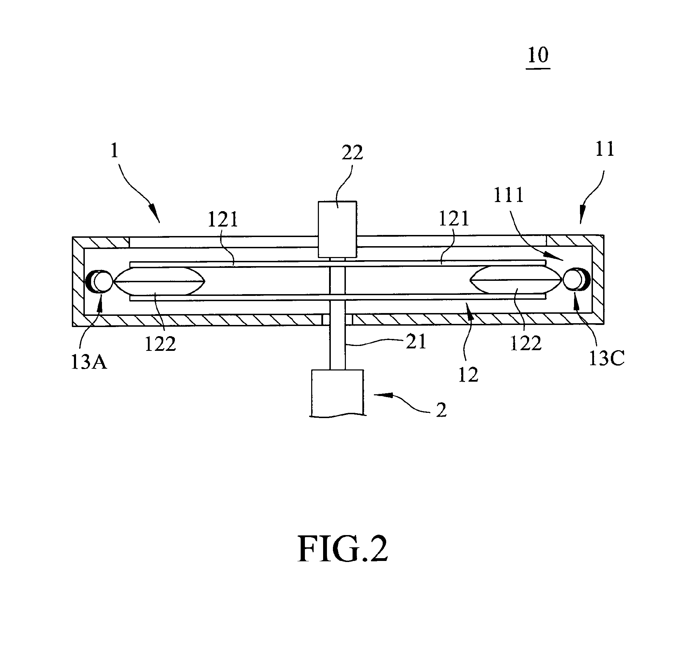

Referring to FIGS. 1 and 2, the first embodiment of the electric generating system 10 according to the present disclosure is shown. The electric generating system 10 includes a driving device 1 and a generator unit 2. The driving device 1 is configured for driving a rotating shaft 21, and includes an annular frame 11, a magnetic pendulum unit 12, four electromagnetic units (13A, 13B, 13C, 13D) and four control units (14A, 14B, 14C, 14D).

The driving device 1 is provided with an activating device 22 (see FIG. 2) for driving the rotating shaft 21 and the magnetic pendulum unit 12 to rotate. The activating device 22 may be a hand-driven tool, an electrical mechanism or a combination thereof. The generator unit 2 is configured to be connected directly to the driving shaft 21 for converting kinetic energy into electric power.

The annular frame 11 includes a center 112 that allows the rotating shaft 21 to extend therethrough. The magnetic pendulum unit 12 is rotatable about the center 112 of the annular frame 11, and includes two levers 121 and two magnetic elements 122. The levers 121 radially and equiangularly extend from the center 112 of the annular frame 11. Each of the levers 121 has two opposite ends, one of the opposite ends is configured to be connected co-rotatably to the rotating shaft 21, and the other one of the opposite ends is mounted with a respective one of the magnetic elements 122.

The electromagnetic units (13A, 13B, 13C, 13D) are mounted on the annular frame 11, and are equiangularly arranged along a circumference of the annular frame 11. In this embodiment, the electromagnetic units (13A, 13B, 13C, 13D) are disposed within an inner space 111 that is defined by the annular frame 11 and that extends in a circumferential direction of the annular frame 11. Each of the electromagnetic units (13A, 13B, 13C, 13D) includes a core 131 and a winding coil 132 wound around the core 131. The winding coil 132 of each of the electromagnetic units (13A, 13B, 13C, 13D) is electrically connected to a power source (not shown) for providing electricity to the winding coil 132. The power source may be a solar cell or other power supplies.

Each of the magnetic elements 122 of the magnetic pendulum unit 12 is attractable by a magnetic force generated by each of the electromagnetic units (13A, 13B, 13C, 13D) when each of the electromagnetic units (13A, 13B, 13C, 13D) is turned on.

Each of the control units (14A, 14B, 14C, 14D) is mounted at the annular frame 11, and is spaced apart from a corresponding one of the electromagnetic units (13A, 13B, 13C, 13D). In this embodiment, the control units (14A, 14B, 14C, 14D) are disposed within the inner space 111 of the annular frame 11. It should be appreciated that the electromagnetic units (13A, 13B, 13C, 13D) and the control units (14A, 14B, 14C, 14D) may be disposed at the outside of the annular frame 11.

Each of the control unit (14A, 14B, 14C, 14D) includes a first sensor (141A, 141B, 141C, 141 D) and a second sensor (142A, 142B, 142C, 142D). Since the structures of the control units (14A, 14B, 14C, 14D) are the same, only one of the control units (14A, 14B, 14C, 14D) will be described in the following descriptions for the sake of brevity. The first sensor (141A, 141B, 141C, 141 D) is electrically connected to the corresponding electromagnetic unit (13A, 13B, 13C, 13D), and is configured for enabling the power source to provide electricity to the coil 132 so as to turn on the corresponding electromagnetic unit (13A, 13B, 13C, 13D) upon detecting the magnetic element 122 of the magnetic pendulum unit 12. The second sensor (142A, 142B, 142C, 142D) is spaced apart from the first sensor (141A, 141B, 141C, 141D) in a rotation direction of the magnetic pendulum unit 12 (indicated by an arrow in FIG. 1, i.e., a counterclockwise direction in this embodiment), is disposed between the first sensor (141A, 141B, 141C, 141D) and the corresponding electromagnetic unit (13A, 13B, 13C, 13D), and is electrically connected to the corresponding electromagnetic unit (13A, 13B, 13C, 13D). The second sensor (142A, 142B, 142C, 142D) is configured for disabling the power source that provides electricity to the coil 132 so as to turn off the electromagnetic unit (13A, 13B, 13C, 13D) upon detecting the magnetic element 122. By this way, the control unit (14A, 14B, 14C, 14D) can turn on the corresponding electromagnetic unit (13A, 13B, 13C, 13D) to generate the magnetic force for attracting the magnetic element 122 of the magnetic pendulum unit 12 so as to facilitate rotation of the magnetic pendulum 12, and can turn off the corresponding electromagnetic unit (13A, 13B, 13C, 13D) to stop generating the magnetic force to thereby allow the magnetic pendulum unit 12 to pass by the corresponding electromagnetic unit (13A, 13B, 13C, 13D). For example, the first and second sensors (141A, 141B, 141C, 141D), (142A, 142B, 142C, 142D) are infrared sensors.

It should be noted that, as shown in FIG. 2, the rotating shaft 21 is disposed vertically to the ground and the annular frame 111 is disposed horizontally to the ground.

As shown in FIG. 1, the operational process of the driving device 1 of the present disclosure is illustrated. First, the activating device 22 (see FIG. 2) drives the rotating shaft 21 and the magnetic pendulum unit 12 to rotate in the counterclockwise direction (indicated by an arrow in FIG. 1). The magnetic pendulum unit 12 is then released and rotates in the counterclockwise direction due to inertia thereof. When any one of the magnetic elements 122 rotates to a position where the first sensor (141A, 141 B, 141C, 141D) is located, the first sensor (141A, 141B, 141C, 141D) detects said magnetic element 122 and turns on the corresponding electromagnetic unit (13A, 13B, 13C, 13D) to generate the magnetic force. In this embodiment, the first sensors (141A, 141C) respectively detect the magnetic elements 122 at the same time and respectively turn on the electromagnetic units (13A, 13C) for respectively attracting the magnetic elements 122 to facilitate rotation of the magnetic pendulum unit 12. Thus, rotation of the magnetic pendulum unit 12 toward the corresponding electromagnetic unit (13A, 13B, 13C, 13D) is facilitated owing to the magnetic force generated by the corresponding electromagnetic unit (13A, 13B, 13C, 13D). Similarly, the first sensors (141B, 141D) respectively turn on the electromagnetic units (13B, 13D) at the same time when detecting the magnetic elements 122.

Said one of the magnetic elements 12 then rotates to a position where the second sensor (142A, 142B, 142C, 142D) is located, and the second sensor (142A, 142B, 142C, 142D) detects said magnetic element 122 and turns off the corresponding electromagnetic unit (13A, 13B, 13C, 13D). In this embodiment, the second sensors (142A, 142C) respectively detect the magnetic elements 122 and respectively turn off the electromagnetic units (13A, 13C) at the same time. Thus, the electromagnetic units (13A, 13C) stop generating the magnetic force so as to allow the magnetic elements 122 to pass by the corresponding electromagnetic units (13A, 13C). Similarly, the second sensors (142B, 142D) respectively turn off the electromagnetic units (13B, 13D) at the same time when detecting the magnetic elements 122.

Hereafter, the magnetic pendulum unit 12 continues to rotate in the counterclockwise direction, and the control units (14A, 14B, 14C, 14D) repeat detection of the magnetic elements 122 to turn on and off the corresponding electromagnetic units (13A, 13B, 13C, 13D) as described above.

By virtue of the control units (14A, 14B, 14C, 14D) that are arranged on the annular frame 11 and that timely turns on and off the electromagnetic units (13A, 13B, 13C, 13D), the electromagnetic units (13A, 13B, 13C, 13D) interacts with the magnetic elements 122 to facilitate continuous rotation of the magnetic pendulum unit 12 and the rotation shaft 21 to thereby generate kinetic energy to be converted to electric power by the generator unit 2. By this way, the driving device 1 of this embodiment can generate kinetic energy from the little electricity provided to the electromagnetic units (13A, 13B, 13C, 13D) in this embodiment.

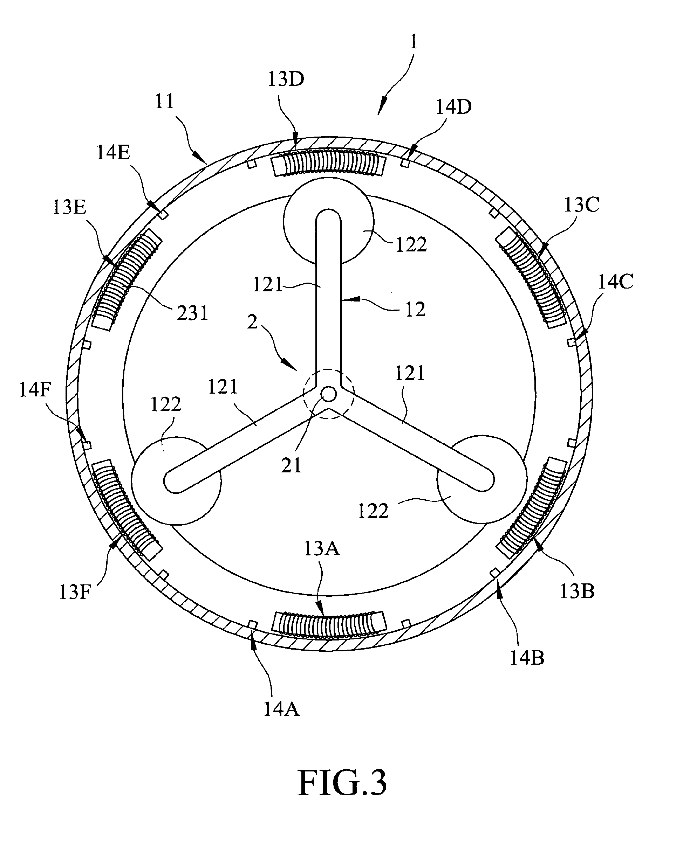

Referring to FIG. 3, the second embodiment of the electric generating system 10 of the present disclosure is shown to be similar to the first embodiment. The difference between the first embodiment and this embodiment resides in the following. The magnetic pendulum unit 12 includes three levers 121, and three magnetic elements 122 mounted respectively to the levers 121. In particular, the levers 121 radially and equiangularly extend from the center 112 of the annular frame 11, that is to say, each two of the levers form an included angle of 120° therebetween. The driving device 1 includes six electromagnetic units (13A, 13B, 13C, 13D, 13E, 13F), and six control units (14A, 14B, 14C, 14D, 14E, 14F) corresponding to the electromagnetic units (13A, 13B, 13C, 13D, 13E, 13F), respectively. The electromagnetic units (13A, 13B, 13C, 13D, 13E, 13F) are arranged on the circumference of the annular frame 11 within the inner space 111, and are spaced apart from each other along the circumference. In this embodiment, the rotation speed of the magnetic pendulum unit 12 is increased. It can be appreciated that the number of the levers 121, the magnetic elements 122, the electromagnetic units 13, and the control units 14 may be varied in other embodiments.

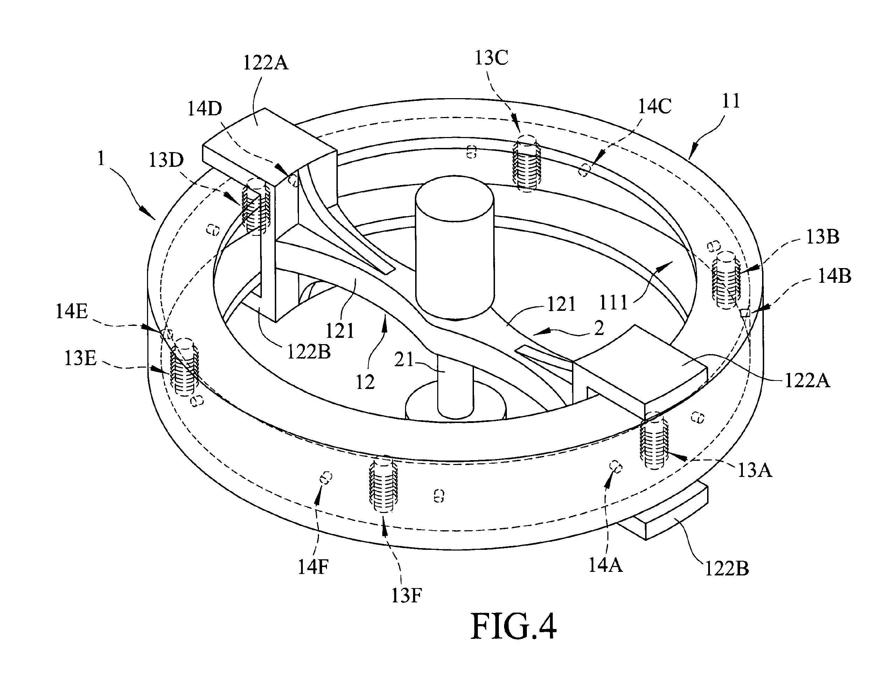

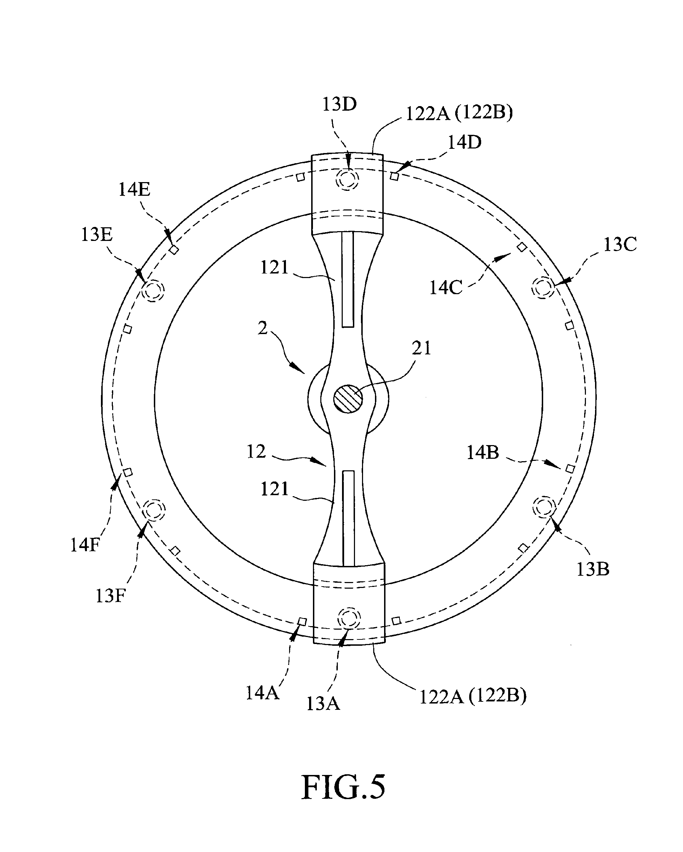

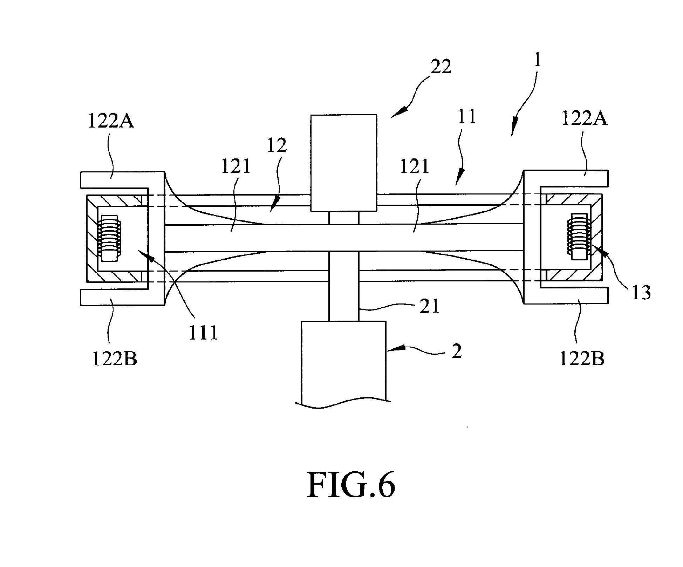

Referring to FIGS. 4 to 6, the third embodiment of this disclosure, which is similar to the first embodiment, is shown. The difference between the first embodiment and the third embodiment resides in that, in the third embodiment, the driving device 2 includes six electromagnetic units (13A, 13B, 13C, 13D, 13E, 13F) and six control units (14A, 14B, 14C, 14D, 14E, 14F). Further, for each lever 121 of the magnetic pendulum unit 12, the magnetic element 122 includes two magnetic blocks (122A, 122B) that are fixedly mounted on the lever 121 at an end opposite to the rotating shaft 21, spaced apart from each other in a direction parallel to the rotating shaft 21, and attractable by the magnetic force generated by each of the electromagnetic units (13A, 13B, 13C, 13D, 13E, 13F). Note that the orientations of the electromagnetic units (13A, 13B, 13C, 13D, 13E, 13F) are modified in accordance with magnetic poles of the magnetic blocks (122A, 122B).

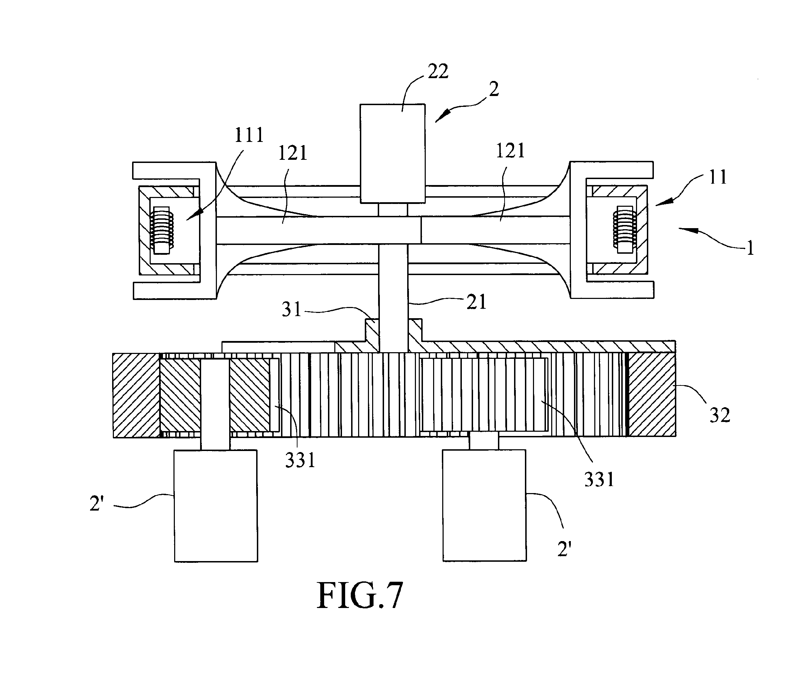

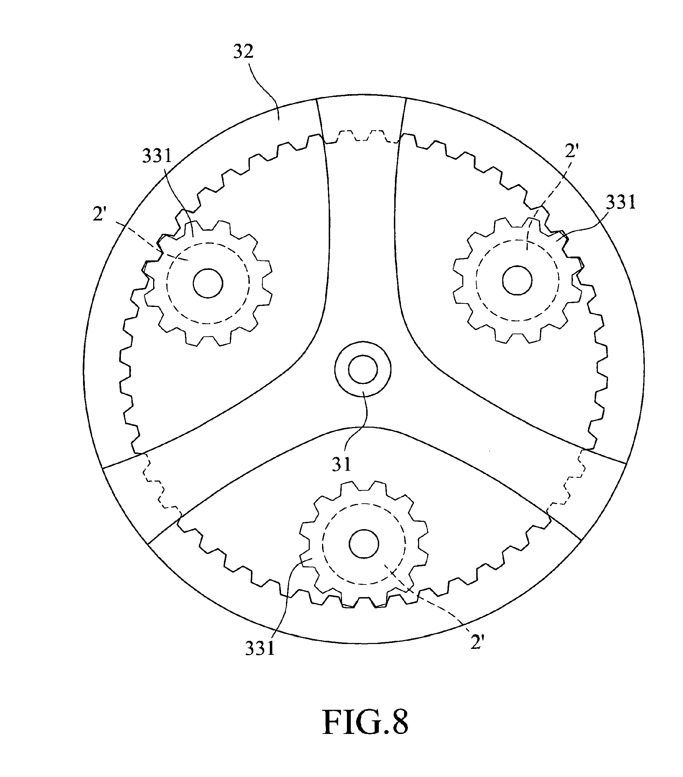

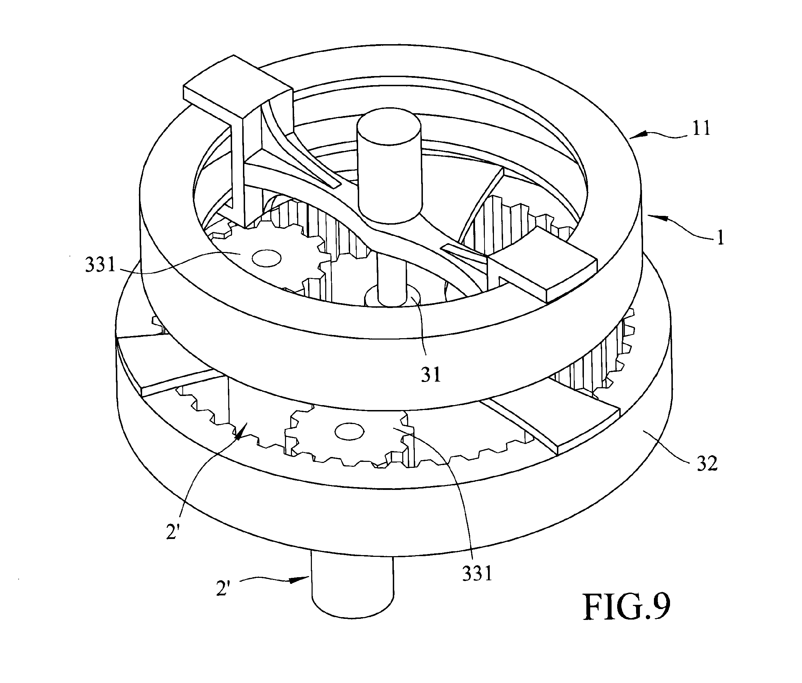

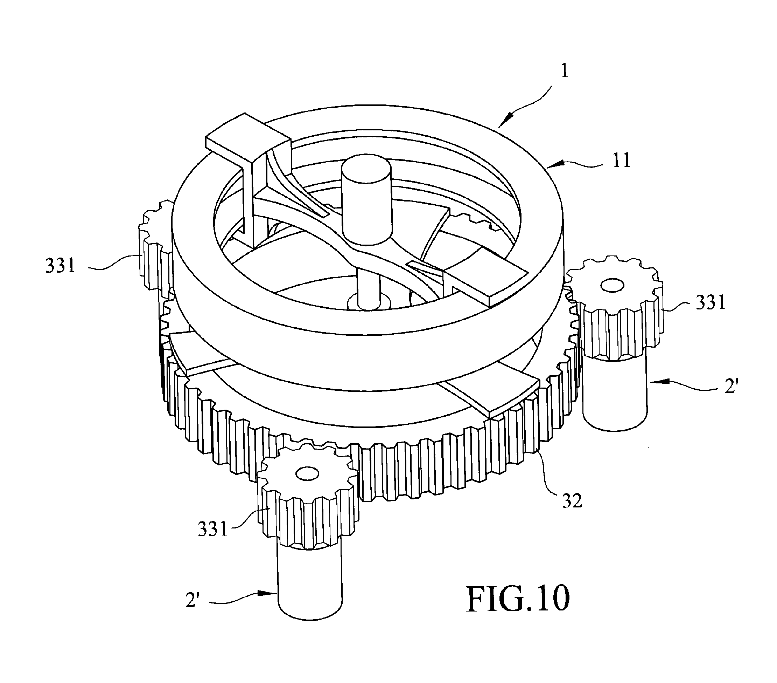

Referring to FIGS. 7 to 10, the fourth embodiment of the electric generating system 10 of the present disclosure is similar to the third embodiment, except that the electric generating system 10 of this embodiment further includes an interconnecting component 31, a main gear 32, a plurality of driven gears 331 and a plurality of generator units 2'. The interconnecting component 31 is connected to and driven by the rotating shaft 21 to rotate. The main gear 32 is connected to and driven by the interconnecting component 31. The driven gears 331 are meshed with and driven by the main gear 32. The generator units 2' are respectively connected to and driven by the driven gears 331 for converting kinetic energy into electric power. In this embodiment, the main gear 32 is an internal gear and the driven gears 32 are external gears. It should be noted that, referring to FIG. 10, the main gear 32 may be an external gear and the driven gears 331 may be internal gears; the disclosure is not limited in this respect.

## Claims

1. A driving device (1) for driving a rotating shaft (21), said driving device (1) being **characterized by**:
an annular frame (11) defining a center (112) that allows the rotating shaft (21) to extend therethrough;
a magnetic pendulum unit (12) being rotatable about said center (112) of said annular frame (11) and configured to be connected co-rotatably to the rotating shaft (21);
a plurality of electromagnetic units (13) mounted on said annular frame (11), and equiangularly arranged along a circumference of said annular frame (11); and
a plurality of control units (14) mounted at said annular frame (11) corresponding to said electromagnetic units (13), respectively, each of said control units being spaced apart from a corresponding one of said electromagnetic units (13), each of said control units (14) being configured to
turn on the corresponding one of said electromagnetic units (13) to generate a magnetic force for attracting the magnetic pendulum unit (12) so as to facilitate rotation of said magnetic pendulum unit (12), and
turn off the corresponding one of said electromagnetic units (13) to stop generating the magnetic force so as to allow said magnetic pendulum unit (12) to pass by the corresponding one of said electromagnetic units (13).

2. The driving device (1) as claimed in claim 1, **characterized in that** said magnetic pendulum unit (12) includes:
a plurality of levers (121) that radially and equiangularly extend from said center (112) of said annular frame (11), each of said levers (121) having two opposite ends, one of said opposite ends of each of said levers (121) being configured to be connected co-rotatably to the rotating shaft (21); and
a plurality of magnetic elements (122), each of said magnetic elements (122) being mounted on the other one of said opposite ends of a respective one of said levers (121) and being attractable by the magnetic force.

3. The driving device (1) as claimed in claim 1, **characterized in that** each of said control units (14) includes:
a first sensor (141) electrically connected to the corresponding one of said electromagnetic units (13) for turning on the corresponding one of said electromagnetic units (13) upon detecting said magnetic pendulum unit (12); and
a second sensor (142) spaced apart from said first sensor (141) in a rotation direction of said magnetic pendulum unit (12), disposed between said first sensor (141) and the corresponding one of said electromagnetic units (13), and electrically connected to the corresponding one of said electromagnetic units (13) for turning off the corresponding one of said electromagnetic units (13) upon detecting said magnetic pendulum unit (12).

4. The driving device (1) as claimed in claim 1, **characterized in that** each of said electromagnetic units (13) includes a core (131) and a winding coil (132) wound around said core (131).

5. The driving device (1) as claimed in claim 2, further **characterized in that** said pendulum unit (12) includes:
each of the magnetic elements (122) including two magnetic blocks (122A, 122B) mounted on the other one of said opposite ends of said lever (121), being attractable by the magnetic force, spaced apart from each other in a direction parallel to the rotating shaft (21).

6. An electric generating system (10), **characterized by** the driving device (1) as claimed in any one of claims 1 to 5, and at least one generator unit (2, 2') configured to be connected to the driving shaft (21) for converting kinetic energy generated by said magnetic pendulum unit (12) into electric power.

7. The electric generating system (10) as claimed in claim 6, further **characterized by**:
an interconnecting component (31) configured to be connected to and driven by the rotating shaft (21) to rotate;
a main gear (32) connected to and driven by said interconnecting component (31);
a plurality of driven gears (331) meshing with and driven by said main gear (32); and
a plurality of said generator units (2') respectively connected to and driven by said driven gears (331) for converting kinetic energy into electric power.

8. The electric generating system (10) as claimed in claim 7, further **characterized in that** said main gear (32) is one of an external gear and an internal gear.
